# EUROPEAN PATENT APPLICATION

(11) **EP 4 836 089 A1**
(43) Date of publication of application: **04.11.2026**
(21) Application number: 26176656.2
(22) Date of filing: 22.06.2020
(51) Int. Cl.: H01M 10/613, H01M 10/6556, H01M 50/24, H01M 50/209, H01M 50/224, H01M 50/507, H01M 50/548

(54) **BATTERY PACK**

(30) Priority: 10.10.2019 KR 20190125308
(62) Document number(s) of the earlier application(s) in accordance with Art. 76 EPC: 20873430.1 / 3 940 868
(71) Applicant: LG Energy Solution, Ltd., Seoul 07335 (KR)
(72) Inventor: CHOI, Jonghwa, 34122 DAEJEON (KR); SEONG, JunYeob, 305-380 DAEJEON (KR); PARK, Myungki, 34122 DAEJEON (KR)
(74) Representative: Plasseraud IP

(57) **Abstract**

The present disclosure relates to a battery module, a structure of which is simplified, and a battery pack including the same includes: a battery cell stack in which a plurality of battery cells are stacked; an insulation plate covering front and rear surfaces of the battery cell stack; a busbar frame formed between the battery cell stack and the insulation plate; a sensing member connecting the busbar frame on the upper side of the battery cell stack; and side surface plates each covering both side surfaces of the battery cell stack, wherein a mounting part is formed on an outer surface of the side surface plate, wherein a lower surface of the battery cell stack is opened, and wherein an outermost battery cell of the battery cell stack and the side surface plate are coupled to each other, and the insulation plate is coupled with the busbar frame or the side surface plate to fix the plurality of battery cells forming the battery cell stack.

## Description

### [TECHNICAL FIELD]

### Cross Citation with Related Application(s)

This application claims the benefit of Korean Patent Application No. 10-2019-0125308 filed on October 10, 2019 with the Korean Intellectual Property Office, the disclosure of which is incorporated herein by reference in its entirety.

The present disclosure relates to a battery module and a battery pack including the same, and more particularly, to a battery module having a simplified structure, and a battery pack including the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate byproducts due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Such a battery module includes a battery cell stack in which a plurality of battery cells are stacked, a frame accommodating the battery cell stack, a busbar frame formed at each of both ends of the battery cell stack, an end plate formed outside the busbar frame and an insulating plate formed inside the end plate.

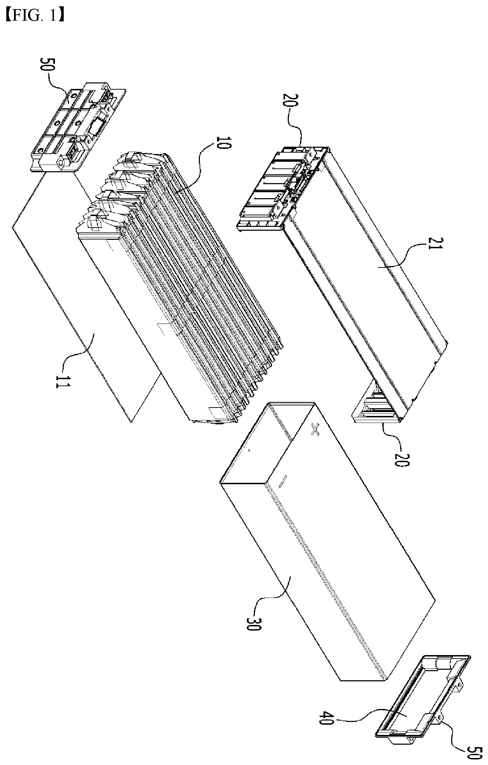

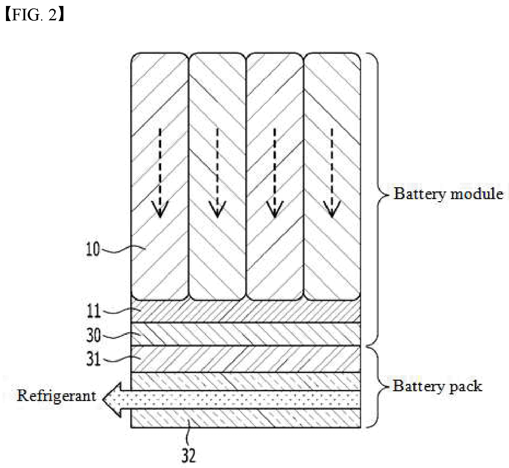

FIG. 1 is an exploded perspective view illustrating a module structure of a battery module according to the related art. FIG. 2 is a schematic cross-sectional view illustrating assembled components when the battery module according to the related art is assembled in a battery pack.

Referring to FIG. 1, the battery module according to the related art includes a battery cell 10 stack, a busbar frame 20 covering front and rear surfaces of the battery cell 10 stack, an upper plate 21 connecting the busbar frame 20 at an upper end of the battery cell 10 stack, a frame 30 accommodating the battery cell 10 stack, the busbar frame 20, and the upper plate 21, and formed of a metal, a thermally conductive resin layer 11 formed between the frame and a lower surface of the battery cell stack, an insulation cover 40 formed on the outer side of the busbar frame 20, and end plates 50 formed of a metal material on the outer side of the insulation cover 40.

In this case, the frame 30 covers the upper, lower, left, and right surfaces of the battery cell 10 stack and end plates 50 are formed so as to cover the front and rear surfaces of the battery cell 10 stack, and as a result, the battery module has a structure in which a metal frame surrounds six surfaces of the battery cell 10 stack, and the thermally conductive resin layer 11 is separately inserted between the lower surface of the battery cell 10 stack and the metal frame to cool the battery cell 10.

In this way, because the metal frame surrounds the six surfaces of the battery cell 10 stack and the thermally conductive resin layer 11 is separately inserted thereto whereby the weight of the battery module relatively becomes heavier, and as illustrated in FIG. 2, a heat sink 32 formed in the battery pack, the thermally conductive resin layer 11 and the frame 30 are located between the heat sink 32 formed in the battery pack and a thermally conductive layer 31 formed on an upper side of the heat sink 32 and the battery cell 10 stack, so that a cooling path becomes complicated and cooling performance decreases.

### [DETAILED DESCRIPTION OF THE INVENTION]

### [TECHNICAL PROBLEM]

It is an object of the present disclosure to provide a battery module having a structure capable of reducing a weight and reducing costs, and a battery pack including the same.

It is another object of the present disclosure to provide a battery module having a structure capable of improving a cooling performance, and a battery pack including the same.

Technical problems to be solved by the present disclosure are not limited to the above-mentioned technical problems, and other technical problems, which are not mentioned above, may be clearly understood from the following descriptions by those skilled in the art to which the present disclosure pertains.

### [TECHNICAL SOLUTION]

In order to realize the above object, according to one embodiment of the present disclosure, there is provided battery module and a battery pack including the same include: a battery cell stack in which a plurality of battery cells are stacked; an insulation plate covering front and rear surfaces of the battery cell stack; a busbar frame formed between the battery cell stack and the insulation plate; a sensing member connecting the busbar frame on the upper side of the battery cell stack; and side surface plates each covering both side surfaces of the battery cell stack, wherein a mounting part is formed on an outer surface of the side surface plate, wherein a lower surface of the battery cell stack is opened, and wherein an outermost battery cell of the battery cell stack and the side surface plate are coupled to each other, and the insulation plate is coupled with the busbar frame or the side surface plate to fix the plurality of battery cells forming the battery cell stack. Further, a thermally conductive layer contacting the lower surface of the battery cell stack and a heat sink located on a lower side of the thermally conductive layer are included.

The battery module may further include an upper plate located on the upper side of the sensing member to cover an upper surface of the battery cell stack and the sensing member.

The upper plate may be formed of a plastic.

The upper plate may be formed of a film.

The side surface plate may be formed of a metal.

The insulation plate may be formed of a plastic.

The battery cell stack and the side surface plate may be coupled to each other by an adhesive agent.

The battery module may further include a lower cover covering the lower surface of the battery cell stack and the lower cover may be formed of a film.

The mounting part is formed of first, second, and third mounting parts, each of the mounting parts includes a coupling hole formed by passing through upwards and downwards, and the battery cell stack may be mounted through the coupling hole.

### [ADVANTAGEOUS EFFECTS]

A battery module and a battery pack comprising the same according to an embodiment of the present disclosure provides effects capable of reducing a weight of the battery module and saving a process cost incurred in a process of manufacturing the battery module, by forming a simple structure fixing a plurality of battery cells by using an insulation plate and a side surface plate instead of an existing frame.

Further, according to an embodiment of the present disclosure, a battery module and a battery pack including the same are formed such that the plurality of battery cells and a thermally conductive layer formed in the battery pack contact each other whereby a cooling path is simplified to improve the cooling performance.

The effects of the present disclosure are not limited to the above-mentioned effects, and other effects not mentioned will be clearly understood by those skilled in the art from the description of the claims.

### [BRIEF DESCRIPTION OF THE DRAWINGS]

FIG. 1 is an exploded perspective view illustrating a module structure of a battery module according to the related art;
FIG. 2 is a schematic cross-sectional view illustrating assembled components when the battery module according to the related art is assembled in a battery pack;
FIG. 3 is an exploded perspective view illustrating a battery module according to an embodiment of the present disclosure;
FIG. 4 is a schematic cross-sectional view illustrating assembled components when the battery module according to an embodiment of the present disclosure is assembled in a battery pack;
FIG. 5 is an exploded perspective view illustrating the battery module having an upper plate according to a modified embodiment of the present disclosure; and
FIG. 6 is an exploded perspective view illustrating the battery module having a lower cover according to a modified embodiment of the present disclosure.

### [DETAILED DESCRIPTION OF THE EMBODIMENTS]

It should be appreciated that the exemplary embodiments, which will be described below, are illustratively described to help understand the present disclosure, and the present disclosure may be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, to help understand the present disclosure, the accompanying drawings are not illustrated based on actual scales, but parts of the constituent elements may be exaggerated in size.

As used herein, terms such as first, second, and the like may be used to describe various components, and the terms are used only to discriminate one component from another component.

Further, the terms used herein are used only to describe exemplary embodiments, and are not intended to limit the present disclosure. A singular expression includes a plural expression unless they have definitely opposite meanings in the context. It should be understood that the terms "comprise", "include", and "have" as used herein are intended to designate the presence of stated features, numbers, steps, constitutional elements, components or combinations thereof, but it should be understood that they do not preclude a possibility of existence or addition of one or more other features, numbers, steps, constitutional elements, components or combinations thereof.

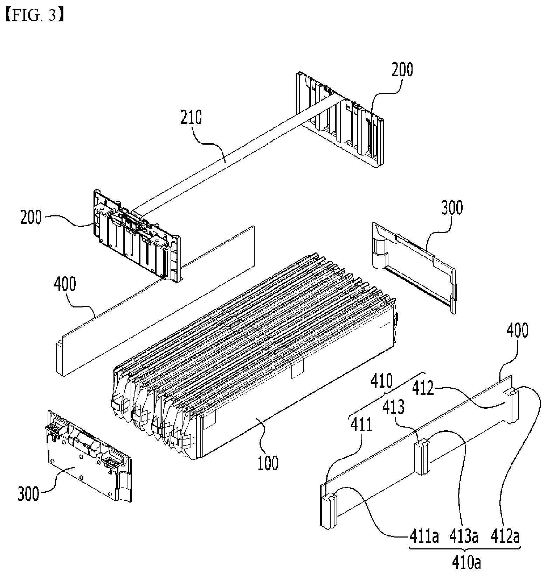

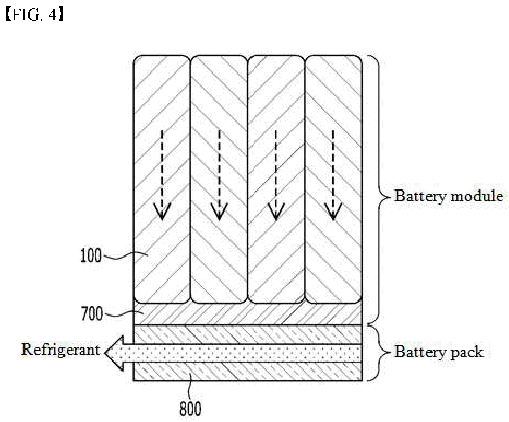

Hereinafter, a battery module according to one embodiment of the present disclosure will be described with reference to FIGS. 3 and 4.

FIG. 3 is an exploded perspective view illustrating the battery module according to an embodiment of the present disclosure. FIG. 4 is a schematic cross-sectional view illustrating assembled components when the battery module according to an embodiment of the present disclosure is assembled in a battery pack.

Referring to FIGS. 3 and 4, a battery module according to an embodiment of the present disclosure includes a battery cell stack in which a plurality of battery cells 100 are stacked, an insulation plate 300 covering front and rear surfaces of the battery cell stack, a busbar frame 200 formed between the battery cell stack and the insulation plate, a sensing member 210 connecting the busbar frame on the upper side of the battery cell stack, and side surface plates 400 each covering both side surfaces of the battery cell stack, wherein a mounting part 410 is formed on an outer surface of the side surface plate, and the insulation plate 300 is coupled to the busbar frame 200 or the side surface plate 400 to fix the plurality of battery cells.

The battery cell 100 may be a secondary battery, and may be configured of a pouch type secondary battery. The battery cell 100 may be formed of a plurality of cells and the plurality of battery cells 100 may be mutually stacked so as to be electrically connected to each other, and thus the battery cell stack may be formed. Each of the plurality of battery cells may include an electrode assembly, a battery case, and an electrode lead (not illustrated) protruding from an electrode assembly.

Each of busbar frames 200 is formed on front and rear surfaces of the battery cell stack. The busbar frames 200 may be formed to cover the front and rear surface of the battery cell stack so as to electrically connect the electrode leads of a plurality of battery cells 100.

The sensing member 210 connects the busbar frame 200 formed on the front surface of the battery cell stack and the busbar frame 200 formed on the rear surface of the battery cell stack on the upper side of the battery cell stack. Each of the busbar frames 200 formed on the front and rear surfaces of the battery cell stack may be connected to each other through the sensing member 210.

Each of the insulation plates 300 is formed on the outer side of the busbar frames with respect to the battery cell stack so as to cover the front and rear surfaces of the battery cell stack. The insulation plates 300 are formed so as to cover the busbar frame 200 to interrupt the busbar frame 200 from being electrically connected to the outside. According to an embodiment of the present disclosure, the insulation plate 300 may be formed of plastic having an insulation function.

The side surface plates 400 are formed so as to cover the both side surfaces of the battery cell stack. According to an embodiment of the present disclosure, the side surface plate 400 may be formed of a metal, and outermost battery cells formed on the opposite sides of the battery cell stack and the side surface plates 400 of the opposite sides thereof may be coupled to each other by an adhesive agent, respectively, and may be also pressed to be coupled to each other. However, the method for coupling the battery cell stack and the side surface plate is not limited thereto, but it is possible to couple the battery cell stack and the side surface plate in various ways.

The mounting part 410 may be formed on the outer surface of the side surface plate 400 to couple the battery module according to the embodiment of the present disclosure to the battery pack through the mounting part 410. The mounting part 410, as illustrated in FIG. 3, may include a first mounting part 411 formed at one side end of the side surface plate 400, a second mounting part 412 formed at opposite end of the side surface plate 400, and a third mounting part 413 formed at the center of the side surface plate.

Each of the mounting parts may include a coupling hole 410a formed to pass therethrough upwards and downwards. The first mounting part 411 may include a first coupling hole 411a, the second mounting part 412 may include a second coupling hole 412a, and a third mounting part 413 may include a third coupling hole 413a. The battery module according to the embodiment of the present disclosure may be coupled to the battery pack through the coupling hole 410a.

The insulation plate 300 is coupled to the busbar frame 200 or the side surface plate 400 to function to fix the plurality of battery cells 100 located in the interiors of plates. According to the embodiment of the present disclosure, the insulation plate 300 may be coupled to the busbar frame 200 or the side surface plate 400 through an adhesive agent.

In a battery module according to the related art, a frame covering the upper, lower, left, and right surfaces of a battery cell stack and end plates covering front and rear surfaces of the battery cell stack so that the weight of the battery module becomes relatively heavy, and it costs a lot to manufacture the frame and the end plates. However, the battery module according to the embodiment of the present disclosure may remove the conventional the frame and the end plates, and instead, may fix and protect the battery cell stack with only the insulation plate and the side surface plates, and thus the weight of the battery module may be reduced and costs for manufacturing the battery module may be reduced.

The battery module according to the embodiment of the present disclosure may be formed such that the lower surface of the battery cell 100 stack is opened. The fact that the lower surface of the battery cell 100 stack is opened means that the lower surface of the battery cell 100 stack is not covered by the frame or the plate as in the related art. Accordingly, when the battery module is installed in the battery pack, the lower surface of the battery cell stack may contact a thermally conductive layer 700 formed in the battery pack according to an embodiment of the present disclosure and may be connected to a heat sink 800 formed on the lower side of the thermally conductive layer 700 through the thermally conductive layer.

The thermally conductive layer 700 may be formed of a thermally conductive substance and the thermally conductive layer 700 may transfer heat generated from the plurality of battery cells 100 of the battery module to the outside of the battery module. The heat sink 800 contacts the thermally conductive layer 700 to emit heat transferred from the thermally conductive layer 700 to the to the outside through refrigerant flowing inside the heat sink 800.

According to the related art, as illustrated in FIG. 2. heat generated from the battery cell has to sequentially pass through a thermally conductive layer, a frame, and a thermally conductive layer, and a heat sink to be emitted to the outside. However, in the battery module according to the embodiment of the present disclosure, because the thermally conductive resin and the frame are removed and the battery cell 100 directly contacts the thermally conductive layer 700 of the battery cell, heat generated in the battery cell 100 passes through only the thermally conductive layer 700 and the heat sink 800, and thus a heat transfer path may be simplified to improve cooling performance. Further, because it is not necessary to use the thermally conductive resin, the weight of the battery module can be reduced and costs for manufacturing the battery module can be reduced.

Hereinafter, according to a modified embodiment of the present disclosure, a battery module having an upper plate will be described.

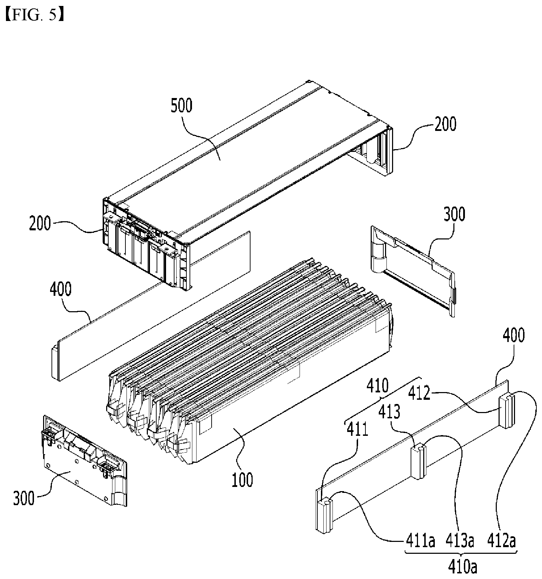

FIG. 5 is an exploded perspective view illustrating the battery module having an upper plate according to a modified embodiment of the present disclosure.

Referring to FIG. 5, the battery module according to a modified embodiment of the present disclosure may further include an upper plate 500 located on the upper side of a sensing member and covering an upper surface of a battery cell 100 stack and a sensing member.

The upper plate 500 according to the modified embodiment of the present disclosure may be formed of plastic that is lighter than a metal and may be also formed of a film that is lighter than plastic. Accordingly, the weight of the battery module may become light as compared with the upper side structure of the frame according to the related art, which is formed of a metal, to also protect electric components of the battery module on the upper side of the battery cell stack through the upper plate 500.

The contents except for the above-mentioned contents are the same as those described for the battery module and the battery pack according to one embodiment of the present disclosure.

Hereinafter, according to a modified embodiment of the present disclosure, a battery module having a lower cover will be described.

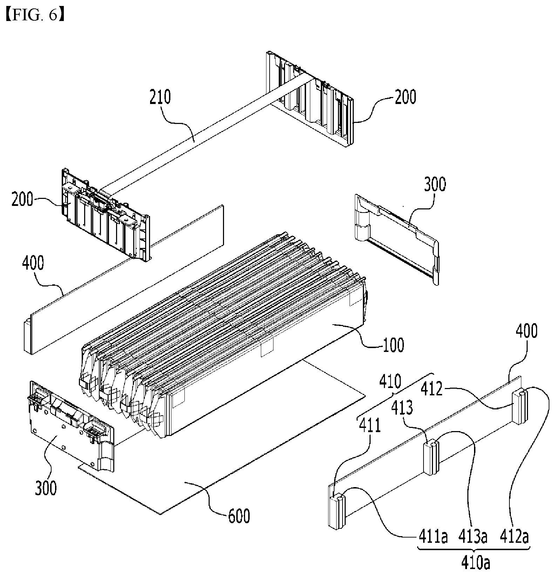

FIG. 6 is an exploded perspective view illustrating the battery module having the lower cover according to the modified embodiment of the present disclosure.

Referring to FIG. 6, the battery module according to the modified embodiment may further include a lower cover 600 covering the lower surface of the battery cell 100 stack. According to a modified embodiment of the present disclosure, the lower cover 600 may be formed of a film that is lighter than a metal. Accordingly, the weight of the battery module may become light as compared with the upper side structure of the frame according to the related art, which is formed of a metal to prevent in advance an unexpected damage that may be caused on the lower surface of the battery cell stack when the battery module is assembled to the battery pack through the lower cover 600.

The contents except for the above-mentioned contents are the same as those described for the battery module and the battery pack according to one embodiment of the present disclosure.

The above-mentioned battery module may be included in the battery pack. The battery pack may be a structure, to which a battery management system (BMS) that collectively manages the temperatures, the voltages, or the like of the batteries of one or more battery modules according to the present disclosure and a cooling device are added, such that the BMS and the cooling device are packed. A plurality of battery modules may be installed in the battery pack, and lower surfaces of the battery cell stacks formed in the plurality of battery modules contact a thermally conductive layer formed in the battery pack, so that heat generated in the battery cell can be emitted to the outside through a heat sink formed to contact the thermally conductive layer.

The battery pack can be applied to various devices. Such a device may be applied to a vehicle such as an electric bicycle, an electric vehicle, or a hybrid vehicle, but the present disclosure is not limited thereto, and is applicable to various devices that can use a battery module, which also belongs to the scope of the present disclosure.

Although the preferred embodiments of the present disclosure have been described in detail above, the scope of the present disclosure is not limited thereto, and various modifications and improvements of those skilled in the art using the basic concepts of the present disclosure defined in the following claims also belong to the scope of rights.

### [Description of Reference Numerals]

100: battery cell
200: busbar frame
210: sensing member
300: insulation plate
400: side surface plate
410: mounting part
411, 412, 413: first, second, third mounting part
411a, 412a, 413a: first, second, third coupling hole
500: upper plat
600: lower cover
700: thermally conductive layer
800: heat sink

Further embodiments are provided in the following items:
Item 1:
   A battery module, comprising:
   a battery cell stack in which a plurality of battery cells are stacked;
   an insulation plate covering front and rear surfaces of the battery cell stack;
   a busbar frame formed between the battery cell stack and the insulation plate;
   a sensing member connecting the busbar frame on the upper side of the battery cell stack; and
   side surface plates each covering both side surfaces of the battery cell stack,
   wherein a mounting part is formed on an outer surface of the side surface plate,
   wherein a lower surface of the battery cell stack is opened, and
   wherein an outermost battery cell of the battery cell stack and the side surface plate are coupled to each other, and the insulation plate is coupled with the busbar frame or the side surface plate to fix the plurality of battery cells forming the battery cell stack.
Item 2:
   The battery module of item 1, further comprising:
   an upper plate located on the upper side of the sensing member to cover an upper surface of the battery cell stack and the sensing member.
Item 3:
   The battery module of item 2, wherein the upper plate is formed of plastic or a film.
Item 4:
   The battery module of item 1, wherein the side surface plate is formed of a metal.
Item 5:
   The battery module of item 1, wherein the insulation plate is formed of a plastic.
Item 6:
   The battery module of item 1, wherein the battery cell stack and the side surface plate are coupled to each other by an adhesive agent.
Item 7:
   The battery module of item 1, further comprising:
   a lower cover covering the lower surface of the battery cell stack.
Item 8:
   The battery module of item 7, wherein the lower cover is formed of a film.
Item 9:
   The battery module of item 1, wherein the mounting part is formed of first, second, and third mounting parts and a coupling hole is formed upwards and downwards through each of the mounting parts.
Item 10:
   A battery pack comprising:
   the battery module according to item 1;
   a thermally conductive layer contacting a lower surface of the battery cell stack on the lower side of the battery module; and
   a heat sink located on the lower side of the thermally conductive layer.

## Claims

1. A battery pack comprising:
at least one battery module, comprising:
a battery cell stack in which a plurality of battery cells (100) are stacked;
a busbar frame (200) covering at least a portion of at least one surface of the battery cell stack
a sensing member (210) connected to the busbar frame (200); and
side surface plates (400) each covering both side surfaces of the battery cell stack,
wherein mounting parts (410) are formed on an outer surface of the side surface plates (400),
wherein a lower surface of the battery cell stack is opened,
wherein an outermost battery cell (100) of the battery cell stack and the side surface plates (400) are coupled to each other to fix the plurality of battery cells (100) forming the battery cell stack, and
wherein lower surfaces of the battery cell stacks formed in the plurality of battery modules contact a thermally conductive layer (700) formed in the battery pack, so that heat generated in the battery cell (100) can be emitted to the outside through a heat sink (800) formed to contact the thermally conductive layer (700).

2. The battery pack of claim 1, further comprising:
an upper plate (500) located on the upper side of the sensing member (210) to cover an upper surface of the battery cell stack and the sensing member (210).

3. The battery pack of claim 2, wherein the upper plate (500) is formed of plastic or a film.

4. The battery pack of claim 1, wherein the side surface plates (400) are formed of a metal.

5. The battery pack of claim 1, wherein the battery cell stack and the side surface plates (400) are coupled to each other by an adhesive agent.

6. The battery pack of claim 1, wherein the mounting part (410) is formed of first, second, and third mounting parts (411, 412, 413) and a coupling hole (411a, 411b, 411c) is formed upwards and downwards through each of the mounting parts (411, 412, 413).
